# EUROPÄISCHE PATENTSCHRIFT

(11) **EP 2 662 958 B1**
(45) Veröffentlichungstag und Bekanntmachung des Hinweises auf die Patenterteilung: **02.06.2021**
(21) Anmeldenummer: 12007866.2
(22) Anmeldetag: 22.11.2012
(51) Int. Cl.: H02K 7/00, H02K 7/108, F02N 11/04, F02N 15/00

(54) **Anordnung bestehend aus einem Verbrennungsmotor**
Assembly consisting of a combustion engine
Agencement composé d'un moteur à combustion

(30) Priorität: 22.02.2012 DE 102012003385
(43) Veröffentlichungstag der Anmeldung: 13.11.2013
(73) Patentinhaber: MAN Truck & Bus SE, 80995 München (DE)
(72) Erfinder: Lampalzer, Markus, 90537 Feucht (DE); Geissler, Josef, 86150 Augsburg (DE); Schreiner, Bernd, 81667 München (DE); Patla, Michael, 90762 Fürth (DE); Vogel, Werner, 91595 Burgoberbach (DE)
(74) Vertreter: v. Bezold & Partner Patentanwälte - PartG mbB

(56) Entgegenhaltungen:
- DE-A1- 10 250 726
- DE-A1-102007 048 443
- FR-A1- 2 782 356

## Beschreibung

Die Erfindung betrifft eine Anordnung bestehend aus einem Verbrennungsmotor, einem an der Kurbelwelle des Verbrennungsmotors angeordneten Schwungrad, einem in einem Gehäuse des Schwungrades angeordneten Startergenerator und einer das Schwungrad mit einer Getriebe verbindenden Reibkupplung.

Die FR 2 782 356 A1 offenbart, dass eine antreibende Kurbelwelle an einem glockenförmigen Schwungrad mit hohem Trägheitsmoment befestigt ist, das den Rotor einer elektrischen Maschine trägt und über eine Reibungskupplung mit einer angetriebenen Welle verbunden ist. Das glockenförmige Schwungrad kann einteilig oder mehrteilig aufgebaut sein.

Die DE 10 2007 048 443 A1 offenbart eine Antriebsvorrichtung für Kraftfahrzeuge, mit einer Brennkraftmaschine, deren Kraftabgabewelle über eine Schwungmasse und ggf. eine Kupplung auf ein Geschwindigkeits-Wechselgetriebe des Kraftfahrzeuges treibt, sowie mit wenigstens einer Elektromaschine, die ebenfalls auf die Schwungmasse abtreibt.

Die DE 102 50 726 A1 offenbart einen Rotor für einen Startergenerator für Kraftfahrzeuge, wobei dessen Wechselwirkerteil an einem Kupplungsgehäuseteil eines Zweimassenschwungrades befestigt ist.

Der Erfindung liegt die Aufgabe zugrunde, einen Antriebsstrang eines mit einem Startergenerator arbeitenden Verbrennungsmotors zu verbessern wobei trotz Anordnung des Startergenerators im Bereich zwischen Schwungrad und Reibkupplung die gesamte Baugruppe eine geringe Abmessung in zumindest axialer Richtung aufweist. Ferner ist es Aufgabe der Erfindung, die Montierbarkeit der gesamten Baugruppe sowie die Fertigung der einzelnen Komponenten möglichst kostengünstig zu halten. Eine weitere Aufgabe der Erfindung ist, eine Baukastenlösung zu ermöglichen, so dass unterschiedliche Getriebearten (Manuelles- oder Automatikgetriebe) oder Getriebeanschlüsse an einem erfindungsgemäßen Schwungrad montierbar sind.

Diese Aufgabe wird durch die Merkmale des Anspruchs 1 gelöst. Vorteilhafte Weiterbildungen der Erfindung ergeben sich aus den Unteransprüchen 2 bis 15.

Als Kern der Erfindung wird es angesehen, dass auf der Abtriebsseite des Schwungrades ein Zwischenstück befestigt ist, derart, dass die drehmomentübertragende Befestigung des Zwischenstücks am Schwungrad bezogen auf den radialen Abstand von der Drehachse des Schwungrades radial innenliegend zu einer drehmomentübertragenden Befestigung des Zwischenstücks an der Reibkupplung angeordnet ist und dass das Zwischenstück eine Widerlagerfläche des Widerlagers für einen Reibbelag der Reibkupplung aufweist. Damit ist der radiale Abstand der Befestigung Schwungrad/Zwischenstück kleiner als der radiale Abstand der Befestigung Zwischenstück/Reibkupplung. Die Befestigung Zwischenstück/Reibkupplung ist damit gegenüber der Befestigung Schwungrad/Zwischenstück radial außenliegend angeordnet.

Der im Anspruch genannte Startergenerator ist im Allgemeinen als elektrische Maschine zu verstehen, die zumindest eine Generatorfunktion aufweist und damit innerhalb des Antriebsstranges bestehende Drehmomente in eine Generatorbetriebsphase in elektrische Energie umwandeln kann. Ferner kann der Startergenerator zumindest für bestimmte Betriebsphasen des Verbrennungsmotors auch als die Kurbelwelle in Drehbewegung versetzendes Element (Anlasserfunktion) fungieren. Durch das Vorsehen eines Zwischenstückes das einerseits an dem Schwungrad und andererseits an der Reibkupplung lösbar befestigt ist, wird eine kleinbauende und hinsichtlich der Einzelteile kostengünstige Lösung zur Realisierung der notwendigen Funktionen erreicht. Es kann eine kostengünstige Herstellung dadurch erreicht werden, dass die Widerlagerfläche für die Reibkupplung, auf welcher der Reibbelag zur Drehmomentübertragung anliegt, auf dem Zwischenelement vorgesehen ist. Insbesondere die radial
außenliegende Verbindung zwischen dem Zwischenstück und der Reibkupplung und gleichzeitig die hierzu radial innenliegende Platzierung der Befestigung des Zwischenstücks mit dem Schwungrad ermöglichen ebenso Kleinbauende und kompakte Übertragungseinheit.

In einer bevorzugten Ausführungsform weist der Startergenerator einen Stator sowie ein Rotor auf, wobei der Stator zumindest bereichsweise an dem das Schwungrad zumindest bereichsweise umhausenden Schwungradgehäuse und/oder bereichsweise an einem die Reibkupplung übergreifenden Gehäuse befestigt ist. Dadurch, dass die Lagefixierung des Stators dem Schwungrad- und/oder Reibkupplungsgehäuse zugeordnet wird, kann insbesondere bei einer integralen Ausgestaltung eine Bauteilreduzierung erreicht werden.

Ferner ist es von Vorteil, wenn der Rotor des Startergenerators zumindest bereichsweise auf dem Schwungrad und/oder zumindest bereichsweise auf dem Zwischenstück befestigt ist. Eine derartige Befestigung umfasst eine verdrehsichere Befestigung des Rotorelementes relativ zu dem Schwungrad und relativ zu dem Zwischenstück. Zwar bewegt sich bei einer derartigen Ausgestaltung der Rotor stets mit dem Schwungrad mit, jedoch erlaubt ein permanent mitgeführter Rotor im Antriebsstrang eine räumlich kompakte technische Lösung der Integration eines Startergenerators innerhalb eines Antriebsstrangs eines Verbrennungsmotors.

Der Rotor ist hierbei formschlüssig und/oder kraftschlüssig durch benachbarte Bereiche des Schwungrades und des Zwischenstückes zumindest in einer axialen Bewegbarkeit eingeschränkt. Bevorzugt wirkt die formschlüssige bzw. kraftschlüssige Verbindung derart auf den Rotor ein, dass dieser im Endmontagezustand keine axiale Bewegung ausführen kann. Die formschlüssige Verbindung des Rotors kann beispielsweise durch den beidseitigen Kontakt von Schwungrad und Zwischenstück an dem Rotor realisiert werden. Eine kraftschlüssige Verbindung kann durch ein einklemmen des Rotors zwischen einem Bereich des Schwungrades und dem Zwischenstück ausführbar sein. Auch kann durch eine formschlüssige und/oder kraftschlüssige Verbindung des Rotors mit dem Schwungrad und/oder mit dem Zwischenstück eine Verdrehsicherung des Rotors zu dem Schwungrad und/oder zu dem Zwischenstück gewährleistet werden. Eine derartige Verdrehsicherung kann beispielsweise durch eine Pressverbindung oder eine andersartige kraftschlüssige Verbindung erfolgen. Hierbei kann beispielsweise im Endmontagezustand ein hervorgehobener Bereich des Zwischenstücks in eine korrespondierende Ausnehmung des Rotors eingreifen und durch diesen Formschluss eine Verdrehung des Rotors relativ zu dem Zwischenstück und schließlich auch relativ zu dem Schwungrad verhindern. In einer bevorzugten Ausführungsform ist der Rotor, scheiben-, prismen- oder zylinderartig ausgebildet, wobei der formschlüssige oder kraftschlüssige Eingriff bzw. Beaufschlagung an den Stirnseiten des Rotors erfolgt.

Das Zwischenstück ist scheiben-, zylinder- und/oder prismenartig ausgebildet und weist in seinem Zentrum einen Aufnahmebereich für ein Antriebswellenelement auf. Der Aufnahmebereich lagert das Antriebswellenelement drehbeweglich, jedoch ferner so, dass eine Abstützung des Antriebswellenelementes in Radialrichtung gewährleistet ist. Beispielsweise kann ein Kugellager oder anders gearteter Lagerkörper im Aufnahmebereich kraft- oder formschlüssig angeordnet sein. In der bevorzugten Ausführungsform ist ein Kugellager in einen kreisrunden Aufnahmebereich eingepresst. Insbesondere bei einer scheibenartigen Ausbildung des Zwischenstücks ist es von Vorteil, wenn der Aufnahmebereich einen Kragenabschnitt umfasst, der im zusammengesetzten Zustand von dem Schwungrad wegweisend ausgerichtet ist. Dieser Kragenabschnitt bietet eine vergrößerte Fläche zur Befestigung eines Lagerkörpers.

Darüber hinaus hat es sich als günstig erwiesen, wenn die im Endmontagezustand dem Schwungrad zugewandte Fläche des Zwischenstücks wenigstens ein Zentriereingriffselement aufweist, das in ein schwungradseitiges Zentriergegenelement eingreift. Durch ein derartiges Zentriermittel zur Verbindung des Schwungrades und des Zwischenstücks kann beispielsweise eine eng tolerierte Achsparallelität und/oder Lageausrichtung der beiden Elemente und wiederum der mit diesen Elementen zu verbindenden Körper gewährleistet werden. Damit wird eine geringe Kettentoleranz, also geringe sich aufaddierende Einzeltoleranzen über mehrere aneinander gesetzte Bauteile erreicht. Hierbei kann das Zentriereingriffselement beispielsweise als Ringwulst oder als auf einem Kreisring angeordnete Hervorhebungen und das Zentriergegenelement als ein mit dem Ringwulst bzw. den auf einem Kreisring angeordneten Hervorhebungen korrespondierender Flächenabschnitt ausgebildet sein.

Eine weitere vorteilhafte Maßnahme sieht es vor, dass der Abstand der Befestigungsmittel zur Fixierung des Zwischenstücks mit dem Schwungrad zur Drehachse dem 0,3- bis 0,7-fachen vorzugsweise dem 0,4- bis 0,6-fachen des Abstandes des Befestigungsmittels zur Fixierung des Zwischenstücks mit dem Kupplungsgehäuse entspricht. Damit ist einerseits das Befestigungsmittel für die Befestigung des Zwischenstücks mit dem Schwungrad gegenüber dem Befestigungsmittel zur Fixierung des Zwischenstücks mit der Kupplung relativ innenliegend angeordnet. Dadurch, dass die beiden Befestigungsmittel in dieser Relation relativ von der Drehachse beabstandet sind, wird einerseits eine relativ weit außen liegende Anordnung des Befestigungsmittels zur Befestigung des Zwischenstück mit der Kupplung ermöglicht und gleichzeitig eine vorteilhafte, derart ausreichend von der Drehachse beabstandete Befestigung des Befestigungsmittels erreicht, sodass selbst die Masse dieses Befestigungsmittels sich positiv (Massesteigerung) auf die Schwungmasse des Schwungrades auswirkt. Ferner wird durch die achsferne Masseerhöhung eine effiziente Festigkeits- und/oder Steifigkeitserhöhung erreicht.

Hierbei kann es ferner von Vorteil sein, wenn der Abstand des Rotors zur Drehachse dem 1,05- bis 1,40-fachen des Abstandes des Befestigungsmittels zur Fixierung des Zwischenstücks mit dem Schwungrad zur Drehachse entspricht. Damit ist das Befestigungsmittel zur Befestigung des Zwischenstücks mit dem Schwungrad gegenüber dem Rotor weiter innenliegend angeordnet und gleichzeitig in einem definierten maximalen Abstand zu diesem angeordnet. Es bietet sich hierbei an, dass das Befestigungsmittel entweder direkt in das Material des Rotors ein- oder durchgreift und/oder dass das Befestigungsmittel direkt in oder durch den Rotor tragende Bereiche des Zwischenelements und/oder direkt in oder durch den Rotor tragende Bereiche des Schwungrades ein- oder durchgreift. Dadurch, dass die Anordnung des Befestigungsmittels zur Fixierung des Zwischenstücks mit dem Schwungrad im "Nahbereich" des Rotors angeordnet ist, kann beispielsweise der den Rotor tragende Bereich des Zwischenstücks oder Schwungrades gleichzeitig die Aufnahmefunktion des Befestigungsmittel zum Befestigen des Zwischenstücks am Schwungrad leisten.

Ferner hat es sich als zweckdienlich erwiesen, wenn das Zwischenstück in seinem radial inneren Bereich wenigstens eine Durchführausnehmung aufweist, die derart ausgebildet ist, das im zusammengesetzten Zustand von Zwischenstück und Schwungrad ein hindurchführen eines Befestigungsmittels und/oder das Handhaben eines Befestigungsmittels durch die Durchführausnehmung hindurch, vorzugsweise mittels eines Werkzeugs ermöglicht wird, wobei das Befestigungsmittel zur Fixierung des Schwungrades an einer Kurbelwelle dient. Mit dieser Maßnahme wird es ermöglicht, dass die Baugruppe bestehend aus dem Schwungrad, dem Zwischenstück, dem Befestigungsmittel zwischen Schwungrad und Zwischenelement als Ganzes von der Kurbelwelle gelöst werden kann. Hierzu kann beispielsweise durch das Hindurchgreifen eines Werkzeugs durch die Durchführausnehmung ein Eingriff mit dem Schraubkopf der, das Schwungrad auf die Kurbelwelle fixierenden Schrauben, erfolgen und letztere gelöst und durch die Durchführausnehmung herausgenommen werden. Im umgekehrten Fall kann auf diese Weise eine Montage und damit eine Vorgruppierung von Zwischenstück, Schwungrad und der Befestigungsschraube für Zwischenstück und Schwungrad erfolgen und diese Baueinheit als Ganzes, vorzugsweise zusätzlich mit Rotor, mit der Kurbelwelle verschraubt werden.

In einer weiteren vorteilhaften Ausführungsform ist wenigstens ein Befestigungsmittel zur Fixierung des Schwungrades mit der Kurbelwelle gleichzeitig als Befestigungsmittel zur Fixierung des Zwischenstücks mit dem Schwungrad ausgelegt. Damit kann die Anzahl der Befestigungsmittel reduziert werden und mit einem Befestigungsmittel sowohl die Verbindung von Zwischenstück und Schwungrad sowie gleichzeitig die Verbindung von Schwungrad und Kurbelwelle erreicht werden.

In einer weiteren vorteilhaften Ausführungsform der Erfindung beträgt das Verhältnis des Radius des Zwischenstücks zu dessen maximaler Breite 2 bis 5, vorzugsweise 2,8 bis 4,2, besonders bevorzugt 3,3 bis 3,9. Durch diese Verhältnisse kann ein im Wesentlichen schmales und scheibenartiges Zwischenstück erreicht werden, das sich einerseits günstig fertigen lässt und andererseits die axiale Baulänge der Anordnung geringfügig verlängern.

Ferner kann es vorgesehen sein, dass an einem äußeren Umfang des Schwungrades ein Zahnkranz angeordnet ist, wobei der Zahnkranz vorzugsweise über wenigstens ein Zahnrad mit einem weiteren Elektromotor verbunden ist. Dieser Elektromotor kann beispielsweise als reines Startaggregat ausgebildet sein und zum in Drehbewegung versetzen und damit Starten des Motors dienen. Durch diesen Elektromotor und den Startergenerator umfasst die Anordnung damit zwei einen Start initiierende Aggregate, wobei in diesem Fall eine vorteilhafte "Arbeitsteilung" der beiden Aggregate dadurch erreicht werden kann, dass der über den Zahnkranz angreifende Elektromotor bei "ungünstigen" Motorbedingungen zum Starten des Motors dient und der mit seinem Rotor auf dem Schwungrad sitzende Startergenerator bei "günstigen" Motorbedingungen startet. Dies kann bedeuten, dass der Elektromotor zum Starten eines kalten Motors (ungünstige Motorbedingung) herangezogen wird und ab einer bestimmten Temperatur des Motors bzw. eines Motorschmiermittels ein Starten über den Startergenerator erfolgt. Insbesondere bei den Bauformen die neben dem Startergenerator noch einen Elektromotor in dem Antriebsstrang vorsehen ist das erfindungsgemäße Zwischenstück vorteilhaft, da der Startergenerator in seiner Leistungsfähigkeit geringer dimensioniert und damit zwischen dem Schwungrad und dem Zwischenstück und/oder an wenigstens einem dieser beiden Elemente angeordnet werden kann.

Eine besonders bevorzugte Ausführungsform der Erfindung sieht es vor, dass der Startergenerator allgemein und der Zahnkranz am Schwungrad beabstandet von der Drehachse angeordnet ist. Hierbei bevorzugt der Zahnkranz an der zum Motor weisenden und gleichzeitig im äußeren Bereich (wenigstens im äußersten Zehntel des Radius) des Schwungrades platziert. Damit können die Massen von Zahnkranz und Startergenerator als effektive Schwungradmasse verwendet werden. Der Zahnkranz greift in einen möglichst motorseitig und nahe dem Schwungrad angeordneten Anlasser und dessen Antriebsritzel ein.

Der am Schwungrad angeordnete Zahnkranz ist vorteilhaft an der dem Zwischenstück bzw. dem Startergenerator gegenüberliegenden bzw. wegweisenden Stirnseite des Schwungrades angeordnet.

Ferner hat es sich als vorteilhaft erwiesen, wenn im Bereich des Startergenerators, insbesondere im Bereich (z.B. in maximal 5 cm Abstand) des Tragbereichs des Stators eine Kühleinrichtung vorgesehen ist. Diese Kühleinrichtung kann eine Flüssigkeitskühlung, vorzugsweise eine Wasserkühlung die mit dem Kühlkreislauf eines am Schwungradgehäuse angeschlossenen Motors wirkverbunden ist umfassen wobei Kühlkanäle der Kühleinrichtung durch Öffnungen des Schwungradgehäuses hindurchgeführt und/oder zumindest bereichsweise in Ausnehmungen und/oder Hohlräumen des Schwungradgehäuses integriert sind. Hierfür kann das Schwungradgehäuse außenseitig mit Anschlussstellen für den Zu- und Ablauf versehen sein und das Kühlmedium zwischen dem Zu- und Ablauf in integral in das Schwungradgehäuse eingebaute (mehr- oder einstückige) Kühlkanäle geführt werden. Dabei kann der Kühlkanal zumindest bereichsweise einstückig in das Schwungradgehäuse integriert sein und/oder zumindest bereichsweise durch einen Ausnehmungsbereich des Schwungradgehäuses und einen dichtend auf diesen Ausnehmungsbereich aufgesetztes Abdeckelement gebildet sein. Durch die Kühleinrichtung kann von dem Startergenerator erzeugte Wärme abgeführt werden um damit die Leistung im Generatorbetrieb zu erhöhen. Im Falle, dass zumindest ein Teil des Kühlkanals als separates Bauteil ausgeführt ist (beispielsweise ein Abdeckelement), ist es vorteilhaft, wenn dieses separate Bauteil durch die selbe Öffnung wie die Verkabelung des Startergenerators geführt wird, beispielsweise wird die Verkabelung und das separate Bauteil des Kühlkanals als Baugruppe an das Schwungradgehäuse verbaut. Durch die räumliche Nähe von Kühlkanal und Verkabelung kann dabei eine Kühlung und/oder Erwärmung der Verkabelung des Startergenerators auch außerhalb des engeren Bereichs um den Startergenerator realisiert werden. Alternativ oder zusätzlich zu der beschriebenen Anordnung der Kühleinrichtung und dessen Kühlkanals im Bereich des Schwungradgehäuses ist es möglich, die Kühleinrichtung und dessen Kühlkanäle zumindest bereichsweise in oder an das Gehäusemittel anzuordnen. Das Gehäusemittel ist dabei ein Gehäuse, das sich an der dem Motor abgewandten Seite des Schwungradgehäuses anschließt und zumindest Teile des Antriebsstrangs (Kupplung, Zwischenstück, Wellenkörper und/oder das Schwungrad) umgibt. Die oben beschriebene Kühleinrichtung ist damit durch ihre Anordnung und Nähe zu dem Startergenerator dazu geeignet, Abwärme des Startergenerators (3) abzuführen.

Die Erfindung ist anhand von Ausführungsbeispielen in den Zeichnungsfiguren näher erläutert. Diese zeigen:

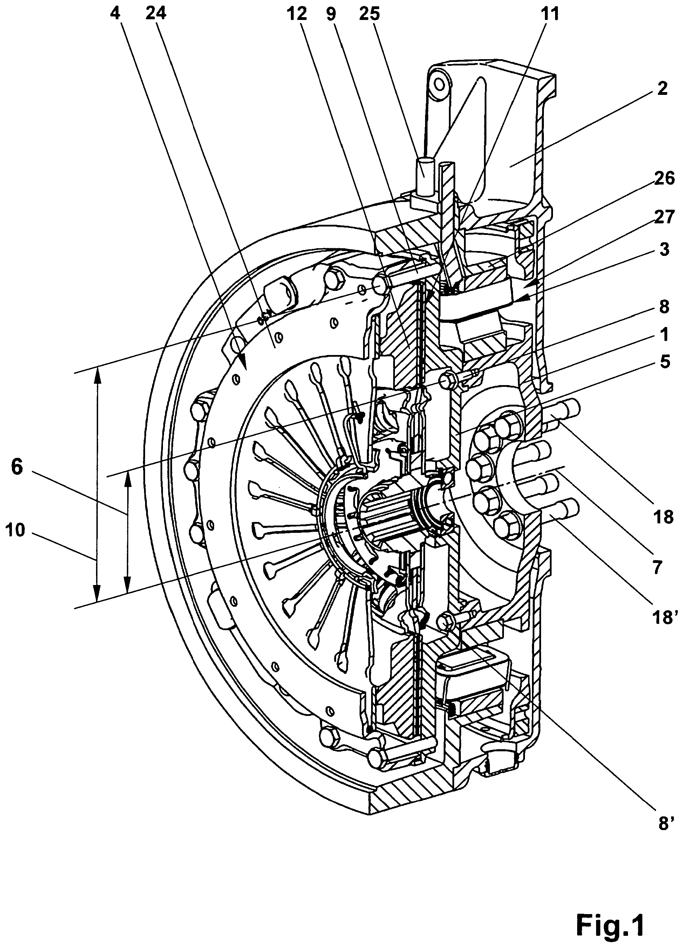

- Fig. 1: eine perspektivische Vollschnittdarstellung einer erfindungsgemäßen Anordnung;

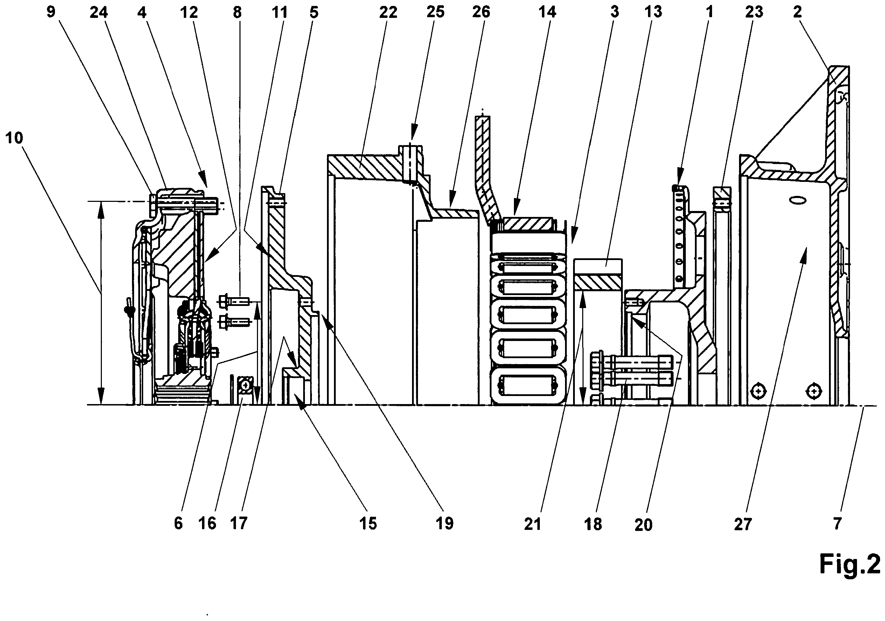

- Fig.2: Eine schematische Explosionsdarstellung der Anordnung gemäß Fig. 1 im Vollschnitt.

In den Zeichnungsfiguren ist eine Anordnung dargestellt, bestehend aus einem Verbrennungsmotor (nicht dargestellt) einem an der Kurbelwelle (nicht dargestellt) des Verbrennungsmotors angeordneten Schwungsrad 1, einem in einem Gehäuse 2 des Schwungrads angeordneten Startergenerator 3 und einer das Schwungrad 1 mit dem Getriebe (nicht dargestellt) verbindenden Reibkupplung 4. An der zur Reibkupplung 4 hin gerichteten Abtriebsseite des Schwungrads 1 ist ein Zwischenstück 5 derart befestigt, dass die drehmomentübertragende Befestigung 8 des Zwischenstücks 5 mit dem Schwungrad 1 bezogen auf den radialen Abstand 6 von der Drehachse 7 des Schwungrads 1 radial innenliegend angeordnet ist, die drehmomentübertragende Befestigung 9 des Zwischenstücks 5 an der Reibkupplung 4 bezogen auf den radialen Abstand 10 von der Drehachse 7 des Schwungrades 1 radial außenliegend angeordnet ist und dass das Zwischenstück 5 an einer Widerlagerfläche 11 das Widerlager für einen Reibbelag 12 der Reibkupplung 4 bildet. Dadurch dass das Zwischenstück 5 lösbar über das Befestigungsmittel 8 an dem Schwungrad 1 befestigbar ist, kann anstelle der dargestellten Reibkupplung 4 an ein identisches Schwungrad 1 auch ein andersartiges Zwischenstück (nicht dargestellt) angesetzt werden, um eine Verbindung des Schwungrades 1 mit andersartigen, vorzugsweise ein flexibles Übertragungselement aufweisenden Kopplungsvorrichtungen (nicht dargestellt) zu gewährleisten. Hiermit wird ein Baukastenprinzip umsetzbar.

Der Startergenerator 3 weist einen Rotor 13 sowie einen Stator 14 auf, wobei der Rotor 13 auf dem Schwungrad 1 angeordnet ist und einen formschlüssigen Kontakt/Verbindung zwischen dem Schwungrad 1 und dem Zwischenstück 5 bildet und damit Lagefixiert relativ zu dem Schwungrad 1 und dem Zwischenstück 5 befestigt ist.

Die Befestigung 8 zur Fixierung des Zwischenstücks 5 an dem Schwungrad 1 ist vorteilhafterweise wärmeübertragend ausgebildet. Beispielsweise kann hierfür eine Wärmeleitfolie verwendet werden, um die an der Widerlagerfläche 11 entstehende Wärme möglichst umgehend an das Schwungrad 1 weiterzuleiten. Wärmeleitfolien sind zum Beispiel aus der EDV-Technik zum Kühlen von Prozessoren bekannt und bestehen beispielsweise aus keramischen Folien.

Das Zwischenstück 5 ist in der dargestellten Ausführungsform scheibenförmig ausgebildet und weist in seinem Zentrum einen Aufnahmebereich 15 auf, der zur Aufnahme eines Antriebswellenelementes (nicht dargestellt) dient und dieses drehbeweglich aufnimmt. Durch die drehbewegliche Aufnahme eines Abtriebswellenelements im Aufnahmebereich 15 wird das Abtriebswellenelement in Radialrichtung abgestützt, wobei hierfür besonders bevorzugt im Aufnahmebereich 15 ein Lagerkörper 16 verwendet wird. Im Zusammenhang mit dem Aufnahmebereich 15 hat es sich als vorteilhaft erwiesen, das Zwischenstück 5 im Aufnahmebereich 15 mit einem Kragenabschnitt 17 zu versehen, der im Endmontagezustand von dem Schwungrad 1 wegweisend ausgerichtet ist.

Das Schwungrad 1 ist über Befestigungsmittel 18, 18' mit der Kurbelwelle (nicht dargestellt) verbunden. Hierbei kann es vorgesehen sein, dass das Zwischenstück 5 Durchführausnehmungen (nicht dargestellt) aufweist, durch welche im zusammengesetzten Zustand von Zwischenstück 5 und Schwungrad 1 die Befestigungsmittel 18, 18' hindurchführbar sind oder zumindest ein Werkzeug durch diese Durchführausnehmungen hindurchführbar ist, um die Befestigungsmittel 18, 18' zu handhaben.

An der im Endmontagezustand dem Schwungrad 1 zugewandten Fläche des Zwischenstücks ist ein Zentriermitteleingriffselement 19 angeordnet, das in ein schwungradsseitiges, korrespondierendes Zentriergegenelement 20 eingreift. In der dargestellten Ausführung ist das Zentriereingriffselement 19 als ringförmiger Wulst und das Zentriergegenelement 20 als ein mit diesem Ringwulst korrespondierender Flächenabschnitt ausgebildet. Der Abstand 6 des Befestigungsmittels (Befestigung 8) zur Fixierung des Zwischenstücks 5 mit dem Schwungrad 1 zur Drehachse 7 entspricht dem 0,3- bis 0,7-fachen des Abstandes 10 des Befestigungsmittels (Befestigung 9) zur Fixierung des Zwischenstücks 5 mit dem Kupplungsgehäuse 24 der Reibkupplung 4. In der dargestellten Ausführungsform ist der Rotor 13 ringförmig ausgebildet, wobei dessen Abstand 21 und zur Drehachse 7 und damit dessen Innendurchmesser dem 1,00- bis 1,40-fachen des Abstandes 6 des Befestigungsmittels (Befestigung 8) zur Fixierung des Zwischenstücks 5 mit dem Schwungrad 1 zur Drehachse 7 entspricht. Der Stator 14 ist vorzugsweise im Bereich des das Schwungrad 1 umhausenden Gehäuses 2 angeordnet. Auf der der Kurbelwelle zugewanden Seite des Schwungrades 1 ist ein Zahnkranz 23 angeordnet, der mit einem Elektromotor/Generator (nicht dargestellt) verbunden ist. Dieser Elektromotor/Generator der zumindest die Funktion eines Elektromotors besitzt, dient als weitere Startmöglichkeit, um die Kurbelwelle in Drehbewegung zu versetzen. Damit liegen dieser Anordnung zwei Möglichkeiten zur Drehmomenteinbringung auf die Kurbelwelle zum Starten des Motors zur Verfügung. Einerseits die des Startergenerators 3 und andererseits die über den Elektromotor/Generator auf den Zahnkranz 23 eingebrachte Energie. Besonders bevorzugt wird bei kalten Motor der über den Zahnkranz 23 eingreifende Elektromotor/Generator verwendet und bei warmen Motor und damit bei geringerem Widerstand zur in Drehbewegung versetzten der Kurbelwelle das Startelement des Startergenerators 3 herangezogen.

Zweckdienlicherweise sind im Endmontagezustand die Mittellängsachse der Befestigungsmittel zur Fixierung des Schwungrades 1 mit der Kurbelwelle parallel zu der Mittellängsachse der Befestigungsmittel zur Fixierung des Zwischenstücks 5 an dem Schwungrad 1 und/oder parallel zu der Mittellängsachse des Befestigungsmittels zur Fixierung der Kupplung an das Zwischenstück 5 ausgerichtet. Auch ist es von Vorteil, wenn die Fügerichtung und damit die Richtung, in welche die Schraubköpfe der als Schrauben ausgebildeten Befestigungsmittel 8, 8', 18, 18' von den Verbindungen Schwungrad/Kurbelwelle und Zwischenstück/Schwungrad in die gleiche Richtung ausgerichtet sind.

Die Reibkupplung 4 umfasst eine Anpressplatte mit einem Reibbelag 12 sowie ein inneres Reibkupplungsgehäuse 24 welches über die Befestigung 9 mittels Schrauben die Reibkupplung 4 mit dem Zwischenstück 5 verbindet. Die Reibkupplung 4 selbst ist innerhalb des Gehäuses 22 angeordnet. Das Gehäuse 22 weist eine Öffnung 25 auf, in welche Bestandteile (hier: Kabel) des Startergenerators 3 hindurchgeführt werden. Ferner weist das Gehäuse 22 einen zur äußeren Umfangsfläche einen nach radial innen versetzten Trägerbereich 26 auf, der sich ringartig in Richtung Kurbelwelle erstreckt und auf welchem der Stator 14 des Startergenerators 3 angeordnet ist. Dabei ist es vorteilhaft, dass der ringartige Trägerbereich 26 des Gehäuses 22 in den Innenbereich 27 des Gehäuses 2 des Schwungrades 1 einragt und/oder zumindest teilweise innerhalb dessen angeordnet ist. Die Umfangsfläche des Gehäuses 22 liegt etwa auf Höhe des das Schwungrad 1 umgebenden Abschnittes des Gehäuses 2. Vorzugsweise schließt die Umfangsfläche in etwa bündig mit dem das Schwungrad umgebenden Bereich des Gehäuses 2 ab. Der Versatz des Trägerbereichs 26 zu der Umfangsfläche erlaubt ein zumindest teilweises Zusammensetzen von Gehäuse 2 und Gehäuse 22. Das Gehäuse 22 ist im oberen Beschreibungsteil im Zusammenhang mit einer Kühleinrichtung (nicht dargestellt) als Gehäusemittel bezeichnet.

Ein Kühlkanal (nicht dargestellt) der Kühleinrichtung kann im Bereich des Gehäuse(-mittels) 22 und/oder des Schwungradgehäuses 2 angeordnet sein wobei dieser Kühlkanal vorzugsweise zumindest bereichsweise einstückig mit dem Gehäuse 22 und/oder dem Schwungradgehäuse 2 ausgebildet ist, derart, dass wenigstens in einem Teilbereich des Kühlkanals ein Teil des Kühlkanalsquerschnitts durch eine Ausnehmung (nicht dargestellt) des Gehäuses 22 und/oder des Schwungradgehäuses 2 und ein weiterer Teil des Kühlkanalquerschnitts durch ein Abdeckelement (nicht dargestellt) gebildet wird.

### BEZUGSZEICHENLISTE

- 1: Schwungrad
- 2: Gehäuse v. 1
- 3: Startergenerator
- 4: Reibkupplung
- 5: Zwischenstück
- 6: Abstand zw. 7 u. 8
- 7: Drehachse
- 8: Befestigung zw. 1 u. 5
- 9: Befestigung zw. 4 u. 5
- 10: Abstand zw. 7 u. 9
- 11: Widerlagerfläche
- 12: Reibbelag
- 13: Rotor
- 14: Stator
- 15: Aufnahmebereich
- 16: Lagerkörper
- 17: Kragenabschnitt
- 18,18': Befestigungsmittel zw. 1 u. Kurbelwelle
- 19: Zentriermitteleingriffselement
- 20: Zentriergegenelement
- 21: Abstand
- 22: Gehäuse v. 4
- 23: Zahnkranz
- 24: Reibkupplungsgehäuse
- 25: Öffnung v. 22
- 26: Trägerbereich v. 22
- 27: Innenbereich v. 2

## Patentansprüche

1. Anordnung bestehend aus einem Verbrennungsmotor einem an der Kurbelwelle des Verbrennungsmotors angeordneten Schwungrad (1), einem in einem Gehäuse (2) des Schwungrades (1) angeordneten Startergenerator (3) und einer das Schwungrad (1) mit einem Getriebe verbindenden Reibkupplung (4), wobei an der Abtriebsseite des Schwungrades (1) ein Zwischenstück (5) befestigt ist, derart, dass
- eine drehmomentübertragende Befestigung (8) des Zwischenstücks (5) am Schwungrad (1) bezogen auf den radialen Abstand (6) von der Drehachse (7) des Schwungrades (1) radial innenliegend zu einer drehmomentübertragenden Befestigung (9) des Zwischenstückes (5) an der Reibkupplung (4) angeordnet ist und dass
- das Zwischenstück (5) an einer Widerlagerfläche (11) das Widerlager für einen Reibbelag (12) der Reibkupplung (4) bildet
**dadurch gekennzeichnet, dass** das Zwischenstück (5) scheiben-, zylinder- und/oder prismenartig ausgebildet ist und in seinem Zentrum einen Aufnahmebereich (15) eines Abtriebswellenelementes umfasst, der eine drehbewegliche Aufnahme und eine Abstützung in Radialrichtung des Abtriebswellenelementes gewährleistet.

2. Anordnung nach Anspruch 1, **dadurch gekennzeichnet, dass** der Startergenerator (3) einen Stator (14) und einen Rotor (13) umfasst wobei der Stator (14) zumindest bereichsweise an einem Gehäuse (2) eines Schwungradgehäuses und/oder zumindest bereichsweise an einem die Reibkupplung (4) übergreifenden Gehäuses (22) befestigt ist.

3. Anordnung nach Anspruch 1 oder 2, **dadurch gekennzeichnet, dass** der Startergenerator (3) einen Stator (14) und einen Rotor (13) umfasst wobei der Rotor (13) zumindest bereichsweise auf dem Schwungrad (1) und/oder zumindest bereichsweise auf dem Zwischenstück (5) befestigt ist.

4. Anordnung nach Anspruch 3, **dadurch gekennzeichnet, dass** der Rotor (13) formschlüssig und/oder kraftschlüssig durch benachbarte Bereiche des Schwungrades (1) und des Zwischenstücks (5) zumindest in seiner axialen und/oder drehbaren Bewegbarkeit eingeschränkt, vorzugsweise eine axiale Verlagerung des Rotors (13) unterbunden wird.

5. Anordnung nach einem der Ansprüche 2 bis 4, **dadurch gekennzeichnet**, die Reibkupplung im Endmontagezustand zumindest bereichsweise von einem Gehäuse (22) umgeben ist und dieses einen nach radial innen versetzten Trägerbereich (26) aufweist, der sich im Endmontagezustand vorzugsweise ringartig in Richtung Kurbelwelle erstreckt und auf welchem der Stator (14) des Startergenerators (3) angeordnet ist wobei im Endmontagezustand bevorzugt der ringartige Trägerbereich (26) des Gehäuses (22) in den Innenbereich (27) des Gehäuses (2) des Schwungrades (1) einragt und/oder innerhalb dessen angeordnet ist und/oder dass im Bereich des Gehäuses (22) und/oder das Schwungradgehäuses (2) eine Kühleinrichtung zur Abführung von Abwärme des Startergenerators (3) angeordnet ist.

6. Anordnung nach einem der vorhergehenden Ansprüche, **dadurch gekennzeichnet, dass** der Aufnahmebereich (15) einen Lagerkörper (16) umfasst.

7. Anordnung nach einem der vorherigen Ansprüche, **dadurch gekennzeichnet, dass** das Zwischenstück (5) am Aufnahmebereich (15) einen Kragenabschnitt (17) umfasst, der im zusammengesetzten Zustand von dem Schwungrad (1) wegweisend ausgerichtet ist.

8. Anordnung nach einem der vorhergehenden Ansprüche, **dadurch gekennzeichnet, dass** die im zusammengesetzten Zustand dem Schwungrad (1) zugewandte Fläche des Zwischenstücks (5) wenigstens ein Zentriereingriffselement (19) aufweist, das in ein schwungradseitiges Zentriergegenelement (20) eingreift wobei vorzugsweise das Zentriereingriffselement (19) als Ringwulst oder als auf einem Kreisring angeordnete Hervorhebungen und das Zentriergegenelement (20) als ein mit dem Ringwulst bzw. den auf einem Kreisring angeordneten Hervorhebungen korrespondierender Flächenabschnitt ausgebildet ist.

9. Anordnung nach einem der vorhergehenden Ansprüche, **dadurch gekennzeichnet, dass** der Abstand (6) des Befestigungsmittels zur Fixierung des Zwischenstücks (5) mit dem Schwungrad (1) zur Drehachse (7) dem 0,3- bis 0,7-fachen, vorzugsweise dem 0,4- bis 0,6-fachen des Abstandes (10) des Befestigungsmittels zur Fixierung des Zwischenstücks (5) mit dem Kupplungsgehäuse der Reibkupplung (4) entspricht.

10. Anordnung nach einem der vorhergehenden Ansprüche, **dadurch gekennzeichnet, dass** der Abstand (21) des Rotors (13) zur Drehachse dem 1,05- bis 1,40-fachen des Abstandes (6) des Befestigungsmittels zur Fixierung des Zwischenstücks (5) mit dem Schwungrad (1) zur Drehachse (7) entspricht.

11. Anordnung nach einem der vorhergehenden Ansprüche, **dadurch gekennzeichnet, dass** das Zwischenstück (5) in seinem radial inneren Bereich wenigstens eine Durchführausnehmung aufweist, die derart ausgebildet ist, dass im zusammengesetzten Zustand von Zwischenstück (5) und Schwungrad (1) ein Hindurchführen eines Befestigungsmittels (18) und/oder das Handhaben eines Befestigungsmittels (18) durch die Durchführausnehmung hindurch, vorzugsweise mittels eines Werkzeugs, möglich ist wobei das Befestigungsmittel (18) der Fixierung des Schwungrades (1) an einer Kurbelwelle dient.

12. Anordnung nach Anspruch 11, **dadurch gekennzeichnet, dass** die im Endmontagezustand die Mittellängsachse der Befestigungsmittel (18) zur Fixierung des Schwungrads (1) mit der Kurbelwelle parallel zu der Mittellängsachse der Befestigungsmittel zur Fixierung des Zwischenstücks (5) an dem Schwungrad (1) und/oder parallel zu der Mittellängsachse des Befestigungsmittels zur Fixierung der Reibkupplung (4) an das Zwischenstück (5) ausgerichtet sind.

13. Anordnung nach einem der vorhergehenden Ansprüche, **dadurch gekennzeichnet, dass** wenigstens ein Befestigungsmittel (18) zur Fixierung des Schwungrads (1) mit der Kurbelwelle gleichzeitig als Befestigungsmittel (18) zur Fixierung des Zwischenstücks (5) mit dem Schwungrad (1) dient.

14. Anordnung nach einem der vorhergehenden Ansprüche, **dadurch gekennzeichnet, dass** das Verhältnis des Radius des Zwischenstücks (5) zu dessen maximaler Breite 2 bis 5, vorzugsweise 2,8 bis 4,2, besonders bevorzugt 3,3 bis 3,9 beträgt.

15. Anordnung nach einem der vorhergehenden Ansprüche, **dadurch gekennzeichnet, dass** an einem äußeren Umfang des Schwungrades (1) ein Zahnkranz (23) angeordnet ist wobei der Zahnkranz (23) vorzugsweise über wenigstens ein Zahnrad mit einem weiteren Elektromotor verbunden ist.

## Claims

1. An arrangement comprising an internal combustion engine, a flywheel (1) arranged on the crankshaft of the internal combustion engine, a starter generator (3) arranged in a housing (2) of the flywheel (1), and a friction clutch (4), which connects the flywheel (1) to a transmission, wherein an intermediate piece (5) is fastened to the output side of the flywheel (1) such that
- a torque-transmitting fastening (8) of the intermediate piece (5) to the flywheel (1) is arranged radially to the inside of a torque-transmitting fastening (9) of the intermediate piece (5) to the friction clutch (4), based on the radial spacing (6) from the axis of rotation (7) of the flywheel (1), and that
- the intermediate piece (5) forms the abutment for a friction lining (12) of the friction clutch (4) at an abutment surface (11),
**characterized in that** the intermediate piece (5) is of disc-, cylinder- and/or prism-type design and preferably comprises an accommodation region (15) for an output shaft element in its centre, said accommodation region ensuring accommodation that allows rotary motion and ensuring support in the radial direction of the output shaft element.

2. The arrangement according to Claim 1, **characterized in that** the starter generator (3) comprises a stator (14) and a rotor (13), wherein the stator (14) is fastened at least in some regions to a housing (2) of a flywheel housing and/or at least in some regions to a housing (22) which fits over the friction clutch (4).

3. The arrangement according to Claim 1 or 2, **characterized in that** the starter generator (3) comprises a stator (14) and a rotor (13), wherein the rotor (13) is fastened at least in some regions to the flywheel (1) and/or at least in some regions to the intermediate piece (5) .

4. The arrangement according to Claim 3, **characterized in that** the rotor (13) is positively and/or nonpositively restricted, at least in its axial and/or rotational mobility, by adjacent regions of the flywheel (1) and of the intermediate piece (5), and preferably axial displacement of the rotor (13) is prevented.

5. The arrangement according to one of Claims 2 to 4, **characterized in that**, in the fully assembled state, the friction clutch is surrounded at least in some regions by a housing (22) and said housing has a support region (26) offset radially inwards, which, in the fully assembled state, preferably extends in the manner of a ring in the direction of the crankshaft and on which the stator (14) of the starter generator (3) is arranged, wherein, in the fully assembled state, the annular support region (26) of the housing (22) preferably projects into the inner region (27) of the housing (2) of the flywheel (1) and/or is arranged therewithin, and/or **in that** a cooling device for dissipating waste heat from the starter generator (3) is arranged in the region of the housing (22) and/or of the flywheel housing (2) .

6. The arrangement according to one of the preceding claims, **characterized in that** the accommodation region (15) comprises a bearing body (16).

7. The arrangement according to one of the preceding claims, **characterized in that**, on the accommodation region (15), the intermediate piece (5) comprises a collar section (17), which is aligned facing away from the flywheel (1) in the assembled state.

8. The arrangement according to one of the preceding claims, **characterized in that** the surface of the intermediate piece (5) which faces the flywheel (1) in the assembled state has at least one centring engagement element (19), which engages in a mating centring element (20) on the flywheel, wherein the centring engagement element (19) is preferably designed as an annular bead or as raised portions arranged on a circular ring, and the mating centring element (20) is designed as a surface segment corresponding to the annular bead or to the raised portions arranged on a circular ring.

9. The arrangement according to one of the preceding claims, **characterized in that** the spacing (6) of the fastening means for fixing the intermediate piece (5) to the flywheel (1) from the axis of rotation (7) corresponds to 0.3 to 0.7 times, preferably 0.4 to 0.6 times, the spacing (10) of the fastening means for fixing the intermediate piece (5) to the clutch housing of the friction clutch (4).

10. The arrangement according to one of the preceding claims, **characterized in that** the spacing (21) of the rotor (13) from the axis of rotation corresponds to 1.05 to 1.40 times the spacing (6) of the fastening means for fixing the intermediate piece (5) to the flywheel (1) from the axis of rotation (7).

11. The arrangement according to one of the preceding claims, **characterized in that** the intermediate piece (5) has, in the radially inner region thereof, at least one feed-through aperture, which is designed in such a way that, in the assembled state of the intermediate piece (5) and the flywheel (1), a fastening means (18) can be fed through and/or a fastening means (18) can be handled through the feed-through aperture, preferably by means of a tool, wherein the fastening means (18) is used to fix the flywheel (1) to a crankshaft.

12. The arrangement according to Claim 11, **characterized in that**, in the fully assembled state, the longitudinal centre line of the fastening means (18) for fixing the flywheel (1) to the crankshaft is aligned parallel to the longitudinal centre line of the fastening means for fixing the intermediate piece (5) to the flywheel (1) and/or parallel to the longitudinal centre line of the fastening means for fixing the friction clutch (4) to the intermediate piece (5).

13. The arrangement according to one of the preceding claims, **characterized in that** at least one fastening means (18) for fixing the flywheel (1) to the crankshaft is simultaneously used as a fastening means (18) for fixing the intermediate piece (5) to the flywheel (1).

14. The arrangement according to one of the preceding claims, **characterized in that** the ratio of the radius of the intermediate piece (5) to the maximum width thereof is 2 to 5, preferably 2.8 to 4.2, particularly preferably 3.3 to 3.9.

15. The arrangement according to one of the preceding claims, **characterized in that** a toothed rim (23) is arranged on an outer circumference of the flywheel (1), wherein the toothed rim (23) is preferably connected to a further electric motor by means of at least one gearwheel.

## Revendications

1. Agencement constitué par un moteur à combustion, un volant (1) agencé sur le vilebrequin du moteur à combustion, un générateur de démarrage (3) agencé dans un boîtier (2) du volant (1) et un embrayage à friction (4) reliant le volant (1) à une transmission, une pièce intermédiaire (5) étant fixée sur le côté sortie du volant (1), de telle sorte que
- une fixation transmettant un moment de rotation (8) de la pièce intermédiaire (5) sur le volant (1) soit agencée, par rapport à l'écart radial (6) de l'axe de rotation (7) du volant (1), radialement à l'intérieur par rapport à une fixation transmettant un moment de rotation (9) de la pièce intermédiaire (5) sur l'embrayage à friction (4), et que
- la pièce intermédiaire (5) forme, sur une surface de contre-appui (11), le contre-appui pour une garniture de friction (12) de l'embrayage à friction (4) ,
**caractérisé en ce que** la pièce intermédiaire (5) est configurée en plaque, en cylindre et/ou en prisme et comporte en son centre une zone de réception (15) d'un élément arbre de sortie, qui assure une réception mobile en rotation et un appui en direction radiale de l'élément arbre de sortie.

2. Agencement selon la revendication 1, **caractérisé en ce que** le générateur de démarrage (3) comporte un stator (14) et un rotor (13), le stator (14) étant fixé au moins en zones sur un boîtier (2) d'un boîtier de volant et/ou au moins en zones sur un boîtier (22) venant en prise sur l'embrayage à friction (4).

3. Agencement selon la revendication 1 ou 2, **caractérisé en ce que** le générateur de démarrage (3) comporte un stator (14) et un rotor (13), le rotor (13) étant fixé au moins en zones sur le volant (1) et/ou au moins en zones sur la pièce intermédiaire (5).

4. Agencement selon la revendication 3, **caractérisé en ce que** le rotor (13) est limité au moins dans sa mobilité axiale et/ou rotative par accouplement de forme et/ou par accouplement de force par des zones voisines du volant (1) et de la pièce intermédiaire (5), de préférence un déplacement axial du rotor (13) est empêché.

5. Agencement selon l'une quelconque des revendications 2 à 4, **caractérisé en ce que** l'embrayage à friction à l'état de montage final est entouré au moins en zones par un boîtier (22), et celui-ci comprend une zone de support (26) décalée radialement vers l'intérieur, qui s'étend à l'état de montage final de préférence en anneau en direction du vilebrequin et sur laquelle le stator (14) du générateur de démarrage (3) est agencé ; à l'état de montage final, la zone de support en anneau (26) du boîtier (22) pénétrant de préférence dans la zone intérieure (27) du boîtier (2) du volant (1) et/ou étant agencée à l'intérieur de celui-ci et/ou **en ce qu'**un appareil de refroidissement pour la dissipation de chaleur résiduaire du générateur de démarrage (3) est agencé dans la zone du boîtier (22) et/ou du boîtier de volant (2).

6. Agencement selon l'une quelconque des revendications précédentes, **caractérisé en ce que** la zone de réception (15) comporte un corps de palier (16) .

7. Agencement selon l'une quelconque des revendications précédentes, **caractérisé en ce que** la pièce intermédiaire (5) comporte une section de collerette (17) sur la zone de réception (15), qui est dirigée à l'opposé du volant (1) à l'état assemblé.

8. Agencement selon l'une quelconque des revendications précédentes, **caractérisé en ce que** la surface de la pièce intermédiaire (5) tournée vers le volant (1) à l'état assemblé comprend au moins un élément de prise de centrage (19), qui pénètre dans un contre-élément de centrage côté volant (20), l'élément de prise de centrage (19) étant de préférence configuré sous la forme d'un bourrelet annulaire ou sous la forme de protubérances agencées sur un anneau circulaire et le contre-élément de centrage (20) étant configuré sous la forme d'une section de surface correspondant au bourrelet annulaire ou aux protubérances agencées sur un anneau circulaire.

9. Agencement selon l'une quelconque des revendications précédentes, **caractérisé en ce que** l'écart (6) du moyen de fixation pour la fixation de la pièce intermédiaire (5) avec le volant (1) à l'axe de rotation (7) correspond à 0,3 à 0,7 fois, de préférence 0,4 à 0,6 fois, l'écart (10) du moyen de fixation pour la fixation de la pièce intermédiaire (5) avec le boîtier d'embrayage de l'embrayage à friction (4).

10. Agencement selon l'une quelconque des revendications précédentes, **caractérisé en ce que** l'écart (21) du rotor (13) à l'axe de rotation correspond à 1,05 à 1,40 fois l'écart (6) du moyen de fixation pour la fixation de la pièce intermédiaire (5) avec le volant (1) à l'axe de rotation (7).

11. Agencement selon l'une quelconque des revendications précédentes, **caractérisé en ce que** la pièce intermédiaire (5) comprend dans sa zone radialement intérieure au moins une cavité de passage, qui est configurée pour permettre, à l'état assemblé de la pièce intermédiaire (5) et du volant (1), un passage d'un moyen de fixation (18) et/ou la manipulation d'un moyen de fixation (18) au travers de la cavité de passage, de préférence au moyen d'un outil, le moyen de fixation (18) servant à la fixation du volant (1) sur un vilebrequin.

12. Agencement selon la revendication 11, **caractérisé en ce que**, dans l'état de montage final, l'axe longitudinal central du moyen de fixation (18) pour la fixation du volant (1) avec le vilebrequin est orienté parallèlement à l'axe longitudinal central du moyen de fixation pour la fixation de la pièce intermédiaire (5) sur le volant (1) et/ou parallèlement à l'axe longitudinal central du moyen de fixation pour la fixation de l'embrayage à friction (4) sur la pièce intermédiaire (5).

13. Agencement selon l'une quelconque des revendications précédentes, **caractérisé en ce qu'**au moins un moyen de fixation (18) pour la fixation du volant (1) avec le vilebrequin sert simultanément de moyen de fixation (18) pour la fixation de la pièce intermédiaire (5) avec le volant (1).

14. Agencement selon l'une quelconque des revendications précédentes, **caractérisé en ce que** le rapport entre le rayon de la pièce intermédiaire (5) et sa largeur maximale est de 2 à 5, de préférence de 2,8 à 4,2, de manière particulièrement préférée de 3,3 à 3,9.

15. Agencement selon l'une quelconque des revendications précédentes, **caractérisé en ce qu'**une couronne dentée (23) est agencée sur une périphérie extérieure du volant (1), la couronne dentée (23) étant de préférence reliée par l'intermédiaire d'au moins une roue dentée avec un moteur électrique supplémentaire.
